# EUROPEAN PATENT APPLICATION

(11) **EP 4 751 991 A1**
(43) Date of publication of application: **03.06.2026**
(21) Application number: 24216872.2
(22) Date of filing: 02.12.2024
(51) Int. Cl.: B60L 58/26, B60L 58/27, H01M 10/48, H01M 10/60, H01M 10/625

(54) **HANDLING A BATTERY ARRANGEMENT**

(71) Applicant: Volvo Truck Corporation, 405 08 Göteborg (SE)
(72) Inventor: Palm, Caroline, 411 05 Göteborg (SE); Nordenham, Jesper, 411 43 Göteborg (SE)
(74) Representative: Valea AB

(57) **Abstract**

A computer system (700) comprising processing circuitry configured to handle a battery arrangement (50) capable of powering an electrical system (1) is provided. The battery arrangement (50) comprises a battery cell (11a) and a monitoring unit (30) configured to monitor a temperature-associated parameter. The processing circuitry (702) is further configured to, based on a target ability of the battery arrangement (50), determine a wake-up condition of the battery arrangement (50) associated with a need to initiate a thermal management function. The processing circuitry (702) is further configured to, trigger the monitoring unit (30) to be configured to perform a wake-up procedure in response to detecting that the at least one parameter associated with a temperature of the battery cell (11a) fulfills the wake-up condition. The wake-up procedure comprises determining a need for, or triggering a thermal management function.

## Description

### TECHNICAL FIELD

The disclosure relates generally to handling a battery arrangement. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A battery arrangement is limited in that it should only be operated within a temperature range. Outside the temperature range, the performance, lifetime and safety will be impacted. As such, thermal management used for cooling or heating the battery arrangement may be needed during operations powered by the battery arrangement. To ensure that the battery arrangement can be utilized at a later point in time, thermal management may also be needed when the battery arrangement or associated electrical systems are in sleep mode, also known as preconditioning.

Preconditioning may however drain the battery arrangement and may be particularly inefficient if the battery arrangement is rarely powering any device or system. Hence, while preconditioning may be important for being able to use the battery arrangement for powering a device or system with sufficient power in a safe manner, in some scenarios it may waste energy and reduce energy efficiency of the battery arrangement. Moreover, when power usage of the battery arrangement is low, there are less temperature constraints of the battery arrangement to safely provide power, and hence, preconditioning may further cause unnecessary drain of energy of cells of the battery arrangement.

Hence, there is a strive to improve efficiency of handling a battery arrangement.

### SUMMARY

According to a first aspect of the disclosure, a computer system comprising processing circuitry configured to handle a battery arrangement is provided. The battery arrangement is capable of powering an electrical system such as a vehicle or a stationary electrical system. The battery arrangement comprises a battery cell and a monitoring unit configured to monitor at least one parameter associated with a temperature of the battery cell. While examples herein will be described with respect to the battery cell and the monitoring unit, the battery arrangement may further comprise a plurality of battery cells and the monitoring unit may in addition be configured to monitor the at least one parameter also with respect to multiple battery cells of the plurality of battery cells.

The processing circuitry is configured to obtain information of a target ability of the battery arrangement during a future time period. At least part of the battery arrangement and/or the electrical system is expected to be arranged in a sleep mode during said future time period. While at least part of the battery arrangement and/or the electrical system is in sleep mode, the monitoring unit may be configured to continuously or periodically monitor the at least one parameter during said sleep mode.

The processing circuitry is configured to, based on the target ability, determine a wake-up condition of the battery arrangement. The wake-up condition is a temperature-related condition associated with a need to initiate a thermal management function. The thermal management function comprises adjusting a temperature of the battery arrangement for the battery arrangement to be able to provide the target ability.

The processing circuitry is configured to trigger the monitoring unit to be configured to perform a wake-up procedure in response to detecting that at least one parameter associated with a temperature of the battery cell fulfills the wake-up condition.

The wake-up procedure comprises triggering at least part of the battery arrangement and/or the electrical system to transition from a sleep mode to an active mode.

The wake-up procedure further comprises at least one of:
- determining whether or not the thermal management function needs to be performed, and
- triggering the thermal management function to be performed.

The first aspect of the disclosure may seek to solve a problem with draining energy of the battery arrangement such as when frequently needing to transition the electrical system and the battery arrangement to an active mode to perform the thermal management function on the basis that the electrical system always needs to be able to utilize a high power from the battery arrangement.

A technical benefit may include improved efficiency of the battery arrangement. This is since the wake-up procedure of the battery arrangement can be limited such that the wake-up procedure is limited to be performed when deemed needed for the battery arrangement to provide the target ability. This means that energy is preserved due to fewer wake-up procedures while still not risking performance, lifetime and safety of the battery arrangement.

In particular, this is achieved since the monitoring unit is configured to perform the wake-up procedure in response to detecting that the at least one parameter associated with the temperature of the battery cell fulfills the wake-up condition associated with a need to perform the thermal management function to be able to provide the target ability. In other words, the battery arrangement and/or the electrical system may only be woken up in case the wake-up condition associated with the battery cell which indicates that, to be able to provide the target ability, the thermal management function may need to be executed.

Since the target ability can be set to not requiring full power of the battery arrangement, the wake-up procedure can be further limited to be performed less often and/or the battery may be subject to lower and higher temperatures and still provide power to meet the target ability while still not risking performance, lifetime and safety of the battery arrangement. In other words, this allows the battery arrangement and electrical system to be in a sleep mode for longer period of time, while still being able to provide basic functionality by the target ability, and thereby reduce energy consumption relating to wake-up procedures.

Optionally in some examples, including in at least one preferred example, the target ability comprises at least one of:
- a power availability for the electrical system during the future time period,
- an ability to transition the electrical system from a sleep mode to an active mode during the future time period, and
- an ability for the electrical system to perform one or more operations powered by the battery arrangement during the future time period.

A technical benefit may include a more efficient handling of the battery arrangement. This is since the target ability can be set to meet expectations of the battery arrangement for the future time period and the wake-up condition can be determined such that the target ability can be fulfilled. As an example, if the target ability relates to the electrical system to be able to perform a low power operation, e.g., charging a low voltage battery such as a 24V battery, powering a climate system, powering auxiliary loads such as a phone charger, powering a radio, etc., then the temperature range of the battery cell may be relaxed since low power can be drained from the battery arrangement in lower and higher temperatures than high power. This means that wake-up is needed less often and the thermal management function is not needed to warm or cool the battery as much as for if full power is needed to be used.

Optionally in some examples, including in at least one preferred example, the processing circuitry is configured to obtain the information of the target ability by being configured to:
- obtain use case information associated with the battery arrangement and/or the electrical system during the future time period, and
- determine the target ability based on said use case information.

A technical benefit may include a more efficient handling of the battery arrangement. This is since the target ability does not need to be explicitly indicated, as it may also be determined on use case information. For example, if the electrical system is intended to not be used until a set time, then the target ability may be set to being able to only provide low or no power, until the set time. Each use case information may thereby relate to a specific target ability needed for the respective use case.

Optionally in some examples, including in at least one preferred example, the use case information is indicative of at least one of:
- power the battery arrangement shall be able to provide during the future time period,
- an intended status of the electrical system during the future time period,
- one or more operations the electrical system shall be able to perform during the future time period, and
- a duration and/or timing information of the future time period.

A technical benefit may include a more efficient handling of the battery arrangement. This is since the target ability may be set to more accurately represent how the battery arrangement and the electrical system shall be used, and thereby the wake-up condition can be set accordingly which limits the wake-up procedures to be performed with respect to the use case information. For example, it may be indicated how much power and/or which operations may need to be used even if the electrical system is in a sleep mode. Furthermore, details of the future time period may also be indicated which may affect the target ability, e.g., how long the electrical system is intended to be in a sleep mode, etc.

Optionally in some examples, including in at least one preferred example, the use case information is indicative of that the electrical system is expected to be in a sleep mode during the future time period and where the electrical system is expected to be able to perform one or more operations if the electrical system is transitioned to an active mode during the future time period.

A technical benefit may include a more efficient handling of the battery arrangement. This is since the target ability can be set to correspond to said use case information such that the one or more operations can be performed, i.e., wake-up procedure and thermal management function may be performed to ensure that the conditions of the battery is sufficient to provide the target ability without risk of damaging the battery arrangement.

Optionally in some examples, including in at least one preferred example, the electrical system is a vehicle, the battery arrangement is comprised in the vehicle, and wherein the one or more operations relates to at least one of:
- starting the vehicle,
- operating the vehicle within a certain time limit from starting the vehicle, and
- initiating the thermal management function.

A technical benefit may include a more efficient handling of the battery arrangement. This is since the target ability can be set to vehicle-specific one or more operations which demand different amounts of power to be drained from the battery arrangement.

Optionally in some examples, including in at least one preferred example, the use case information is indicative of at least one of: environmental information and a capability of the battery arrangement. In these examples, the processing circuitry is configured to determine the target ability based on at least one of the environmental information and the capability of the battery arrangement.

A technical benefit may include a more efficient handling of the battery arrangement. This is since the target ability can further be based on how future, e.g., predicted weather or ambient temperature affects the battery arrangement. Furthermore, the capability of the battery arrangement may further relate to how the target ability can be set and/or what temperature range the battery arrangement needs to be within to provide said target ability.

Optionally in some examples, including in at least one preferred example, the processing circuitry is configured to determine the target ability based on at least one of:
- predefined heuristics with respect to the use case information, and
- mapping the use case information to the target ability.

A technical benefit may include a more efficient handling of the battery arrangement. This is since the ability can be directly mapped or defined by heuristics such that the wake-up condition corresponds to the need for performing the thermal management function to be able to provide the target ability.

Optionally in some examples, including in at least one preferred example, the processing circuitry is configured to determine the wake-up condition by being configured to determine at least one condition relating to at least one out of: power, State of Charge (SoC), energy, or temperature of the battery arrangement which individually or jointly with at least one other condition is associated with a need for the thermal management function of the battery arrangement to be initiated for adjusting a temperature of the battery arrangement for the battery arrangement to be able to provide the target ability.

A technical benefit may include a more efficient handling of the battery arrangement. This is since the wake-up condition can be flexibly and accurately set such that any suitable condition can be used to detect when there is a need for initiating the thermal management function to be able to provide the target ability. This means that while the target ability may indicate the need to be able to perform a certain operation or use a certain amount of power, the wake-up condition may translate the target ability to a condition related to temperature such that the thermal management function can be initiated only when needed.

Optionally in some examples, including in at least one preferred example, the wake-up condition is associated with at least one of:
- a power availability constraint of the battery arrangement,
- a temperature constraint of the battery arrangement,
- a rate of change constraint in temperature or power availability of the battery arrangement.

A technical benefit may include a more efficient handling of the battery arrangement. This is since the wake-up condition can accurately detect when the target ability is in risk of not be able to be provided and the wake-up procedure should then be performed. For example, if the temperature or power availability drops fast, while still within normal absolute values, such a behavior may still indicate that there is a need to perform the thermal management function.

Optionally in some examples, including in at least one preferred example, the processing circuitry is configured to trigger the monitoring unit to be configured to perform the wake-up procedure by being configured to at least one of:
- configure the monitoring unit to perform the wake-up procedure in response to detecting that the at least one parameter fulfills the wake-up condition, and to
- instruct a battery control unit arranged to control the monitoring unit to configure the monitoring unit to perform the wake-up procedure in response to detecting that the at least one parameter fulfills the wake-up condition.

A technical benefit may include a more efficient handling of the battery arrangement. This is since the monitoring unit can be configured by any suitable unit of the battery arrangement, thereby improving flexibility such that the battery arrangement can be distributed in an efficient manner.

Optionally in some examples, including in at least one preferred example, the processing circuitry is configured to trigger the monitoring unit to be configured to perform the wake-up procedure by being configured to, determine a range and/or rate of change of the at least one parameter which fulfils the wake-up condition, and to trigger the monitoring unit to be configured to perform the wake-up procedure in response to detecting that the at least one parameter of the battery cell is within the determined range and/or is equal to or greater than the determined rate of change.

A technical benefit may include a more efficient handling of the battery arrangement. This is since the range and/or rate of change of the at least one parameter may be determined such that it fulfils the wake-up condition. The wake-up condition can be converted into the context of the at least one temperature-related parameter such that the wake-up procedure can be performed by measuring or estimating the at least one parameter of the battery cell.

Optionally in some examples, including in at least one preferred example, the at least one parameter associated with the temperature of the battery cell comprises at least one of:
- a temperature measurement or estimation of the battery cell,
- a voltage measurement or estimation of the battery cell, and
- a resistance measurement or estimation of the battery cell.

A technical benefit may include a more efficient handling of the battery arrangement. This is since any suitable temperature-related parameter(s) may be used as part of the at least one parameter, measured or estimated. This further means that the wake-up condition can be fulfilled accurately using any suitable parameter or combination thereof which relates to temperature for the battery cell, e.g., temperature, resistance, voltage, etc.

According to a second aspect of the disclosure, an electrical system is provided. The electrical system comprises a battery arrangement arranged for powering the electrical system. The battery arrangement comprises a battery cell and a monitoring unit configured to monitor at least one parameter associated with a temperature of the battery cell. The electrical system may comprise a computer system according to any of the first aspect, and/or the battery arrangement is controlled by the computer system according to the first aspect.

According to a third aspect of the disclosure, a computer-implemented method for handling a battery arrangement is provided. The battery arrangement is capable of powering an electrical system. The battery arrangement comprises a battery cell and a monitoring unit configured to monitor at least one parameter associated with a temperature of the battery cell. The method comprises, by a processing circuitry of a computer system, obtaining information of a target ability of the battery arrangement during a future time period. At least part of the battery arrangement and/or the electrical system is expected to be arranged in a sleep mode during said future time period.

The method comprises, by the processing circuitry, based on the target ability, determining a wake-up condition of the battery arrangement. The wake-up condition is a temperature-related condition associated with a need to initiate a thermal management function. The thermal management function comprises adjusting a temperature of the battery arrangement for the battery arrangement to be able to provide the target ability.

The method comprises, by the processing circuitry, triggering the monitoring unit to be configured to perform a wake-up procedure in response to detecting that the at least one parameter associated with a temperature of the battery cell fulfills the wake-up condition.

The wake-up procedure comprises triggering at least part of the battery arrangement and/or the electrical system to transition from a sleep mode to an active mode, and wherein the wake-up procedure further comprises at least one of:
- determining whether or not the thermal management function needs to be performed, and
- triggering the thermal management function to be performed.

Optionally in some examples, including in at least one preferred example, the target ability comprises at least one of:
- a power availability for the electrical system during the future time period,
- an ability to transition the electrical system from a sleep mode to an active mode during the future time period, and
- an ability for the electrical system to perform one or more operations powered by the battery arrangement during the future time period.

Optionally in some examples, including in at least one preferred example, obtaining the information of the target ability comprises:
- obtaining use case information associated with the battery arrangement and/or the electrical system during the future time period, and
- determining the target ability based on said use case information.

Optionally in some examples, including in at least one preferred example, the use case information is indicative of at least one of:
- power the battery arrangement shall be able to provide during the future time period,
- an intended status of the electrical system during the future time period,
- one or more operations the electrical system shall be able to perform during the future time period, and
- a duration and/or timing information of the future time period.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary system diagram of a battery arrangement, an electrical system, and a computer system.
**FIG. 2** is a flow chart of an exemplary method according to an example.
**FIG. 3** illustrates an example scenario
**FIG. 4** illustrates an example scenario.
**FIG. 5** is another view of **FIG. 1****,** according to an example.
**FIG. 6** is a flow chart of an exemplary method according to an example.
**FIG. 7** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Examples herein may relate to the field of battery management and thermal management. The examples herein are typically related to electric vehicles such as trucks, cars, buses, boats, construction equipment, airplane but can also be applied to industrial systems e.g., stationary energy storage systems.

In particular, as part of developing the Examples herein, problems regarding preconditioning, or lack thereof, have been identified and considered.

Existing solutions may relate to not having any preconditioning function at all, i.e., no heating or cooling, and may instead rely on that a system using a battery will not be off for longer periods of time which may risk the temperature of the battery arrangement falling below or rising above the temperature range.

Solutions performed for vehicle systems may relate to waking up a vehicle Electronic Control Unit (ECU) periodically to check if thermal management is needed based on a current temperature. As part of developing examples herein, a problem has been identified with this approach in that there is a risk that the periodicity of checking for the need of thermal management may be misaligned with how fast temperatures rise or drop. A consequence is that there is a risk for the temperature to fall below or rise above the temperature range before the check or just after the check. Another problem may be that the temperature range may be set for a general, high, or full capability to draw power from the battery arrangement.

Due to the above reasons, conservative modelling may often be needed to ensure that the temperature range is adhered to for the battery arrangement to be able to fulfill a power need. This means that entire systems may need to frequently be transitioned from a sleep mode using no power or minimal power, to check the temperature of the battery arrangement. While the process may be quick, transitioning from the sleep mode to the active mode drains energy from battery cells of the battery arrangement. Since these processes are typically triggered based on a conservative modelling, often they may be performed without having to take any action and thereby wastes energy and/or may further maintain the battery arrangement at a higher temperature than what may be necessary, thereby further wasting energy.

Examples herein may relate to optimizing preconditioning by utilizing real time measured data from a battery cell to decide if thermal management is needed. Using input or use case information from an electrical system such as a vehicle may be used to set targets prior to turning off/going to sleep. The solutions of the examples herein may alleviate at least some of the problems discussed above.

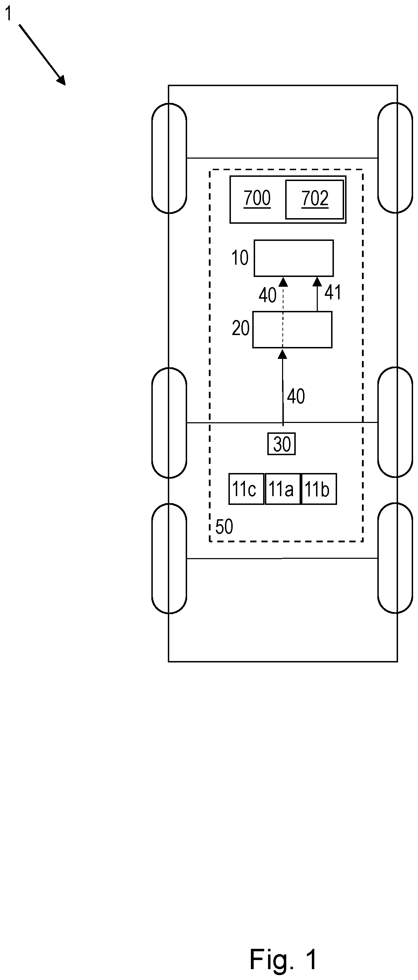

**FIG. 1** illustrates a **battery arrangement 50,** an **electrical system 1,** and a **computer system 700** according to an example. The battery arrangement 50 is capable of powering the electrical system 1. The battery arrangement 50 comprises a **battery cell 11a.**

The battery arrangement 50 may be comprised in the electrical system 1. Alternatively, the battery arrangement may be remote to the electrical system 1 such as by being connected by a wire to the electrical system 1.

In FIG. 1, the electrical system 1 is illustrated as a vehicle, e.g., any suitable vehicle such as a truck, car, bus, heavy-duty vehicle, construction equipment or marine vessel. In examples herein, the electrical system 1 may be a vehicle, or may be comprised in a vehicle.

While examples herein focus on vehicle applications where the battery arrangement 50 is comprised in the electrical system 1 being a vehicle, the battery arrangement 50 may also be a standalone battery arrangement for use in any industrial or home use, i.e., as part of a stationary electrical storage system. Such a stationary electrical system may be an electrical storage system used for supporting a power grid e.g., when there is a low power supply in the power grid, or may be used for supplying power when there is no power grid available.

The battery arrangement 50 comprises a **monitoring unit 30** configured to monitor at least one parameter associated with a temperature of the first battery cell 11a. The cell monitoring unit 30 may be a Cell Supervision Circuit (CSC).

While the battery arrangement 50 may comprise any suitable number of **secondary monitoring units 31** and **second battery cells 11b-c,** e.g., wherein a monitoring unit 30, 31 may monitor one or multiple cells 11a-c, examples herein will focus on the monitoring unit 30 and the battery cell 11a.

The at least one parameter monitored by the monitoring unit 30 may relate to estimated or measured at least one parameter of the battery cell 11a. When examples relate to an estimated at least one parameter, the at least one parameter may be estimated based on parameters of one or more second battery cells b-c.

The cell monitoring unit 30 is configured to monitor the battery cell 11a and optionally the one or more second battery cells 11b, 11c. As an example, the cell monitoring unit 30 may be configured to monitor the at least one parameter by monitoring a temperature of the battery cell 11a, e.g., by measuring the temperature of the battery cell 11a and/or the one or more second battery cells 11b, 11c and estimating the temperature of the battery cell 11a. The cell monitoring unit 30 may additionally or alternatively be monitoring any suitable parameter, e.g., any of current, resistance, and/or voltage of the battery cell 1 1a as part of monitoring the at least one parameter. The cell monitoring unit 30 may be configured to always be in an active state, i.e., to always be turned on. The cell monitoring unit 30 may continuously and/or periodically monitor the at least one parameter, even when other entities of examples herein are in a sleep mode. The cell monitoring unit 30 may be powered by the battery arrangement 50 and/or may be powered by a separate battery dedicated for powering the cell monitoring unit 30.

The battery arrangement 50 may comprise a **battery control unit 20** and/or a **thermal management control unit 10.** The battery control unit 20 and/or the thermal control unit 10 may be part of the same or different unit and may both be part of an Electronic Control Unit (ECU) of a vehicle when the electrical system 1 is a vehicle.

In some examples herein, the battery control unit 20 may be arranged to control and/or be in communication with the monitoring unit 30, e.g., for configuring the monitoring unit 30 and/or communicating with the monitoring unit 30.

The thermal control unit 10 may be configured to control a thermal management function of the battery arrangement 50, i.e., which may comprise adjusting a temperature of the battery arrangement 50, e.g., by initiating cooling or heating of the battery arrangement 50 depending on whether the battery arrangement 50 is deemed too cold or too warm such as based on at least one temperature-related parameter.

In examples herein, the electrical system 1 and the battery arrangement 50, e.g., including at least one of the control unit 20 and the thermal control unit 10 may be set to a sleep mode wherein no power or a minimal amount of power is drained from the battery arrangement 50 by the electrical system 1. The minimal amount of power may be an amount of power below a power threshold.

To ensure that the thermal management function is performed when the battery arrangement is too cold or too warm, the monitoring unit 30 is monitoring the at least one parameter of the battery cell 11a, and in some examples herein, when determined that the battery arrangement 50 is at risk of not being able to provide power according to a target ability, e.g., a specific operation, then the monitoring unit transmits a first wake-up signal 40 for transitioning any suitable part of the battery arrangement 50 to an active mode such that the thermal management function can be performed - if needed.

In examples herein, this may be performed by the monitoring unit 30 transmitting a first wake-up signal 40 to the battery control unit 20. The first wake-up signal 40 may also be transmitted from the monitoring unit 30 to the thermal control unit 10, or forwarded by the battery control unit 20 to the thermal control unit 10. Alternatively, when being transition to an active mode in response to receiving the first **wake-up signal 40,** the battery control unit 20 may be configured to transmit a **second wake-up signal 41** to the thermal control unit 10.

Independent on how and which unit is transitioned to an active mode, the monitoring unit 30 may in examples herein be configured to perform a wake-up procedure in response to detecting that the at least one parameter associated with a temperature of the battery cell 11a fulfills a wake-up condition, e.g., a temperature or temperature-related parameter exceeds a threshold. The wake-up procedure comprises triggering at least part of the battery arrangement 50 and/or the electrical system 1 to transition from a sleep mode to an active mode. The wake-up procedure further comprises at least one of:
- determining whether or not the thermal management function needs to be performed, and
- triggering the thermal management function to be performed.

The wake-up procedures of example herein may be a procedure which is initiated by the first wake-up signal 40 as transmitted by the monitoring unit 30, and may further be executed by any suitable unit of the battery arrangement 50.

The battery arrangement 50 comprises one or more battery cells, including the battery cell 11a and optionally the one or more second battery cells 11b-c. The one or more battery cells may comprise just a few battery cells, or up to hundreds of battery cells.

The battery cell 11a may be any type of battery cell, e.g., cylindrical or prismatic cells. The battery cell 11a may be a lithium-ion cell.

The battery control unit 20 may be, or may be comprised in, a Battery Management Unit (BMU) and/or a Battery Management System (BMS).

The battery control unit 20 may indicate the at least one parameter to the thermal control unit 10 - or an ECU, e.g., as part of transmitting the first or second wake-up-signal 40, 41. The at least one parameter and/or any other suitable communication to/from the battery control unit 20 may be performed by communicating using a Controller Area Network (CAN) message and/or via a Serial Peripheral Interface (SPI) interface, e.g., which may temporarily wake-up the thermal control unit 10, if in sleep mode, to perform the thermal management function such as by controlling coolant pumps and/or activating a heater or cooler of the electrical system 1 or the battery arrangement 50. SPI is commonly used within the battery arrangement 50 for communication between micro-controller and other elements. CAN may typically be used for longer distance communication, such as between the battery arrangement 50 and different units of the electrical system 1, such as between vehicle units when the electrical system 1 is a vehicle. In examples herein SPI is typically used between the battery control unit 20 and the cell monitoring unit 30. CAN may typically be used between the battery control unit 20 and the thermal control unit 10 or to other control units. Additionally or alternatively, where suitable, wireless communication or any other suitable communication technology may be used.

In some example herein , the electrical system 1 is arranged, e.g., configured, in a low power mode such as being turned off. When the electrical system 1 is a vehicle, this may be scenarios when the vehicle is parked, e.g., long-term during a future time period. At this point, the monitoring unit 30 may still be active such that the at least one parameter can be monitored.

The monitoring unit 30 may be powered by the batteries in the battery arrangement 50, such as from the battery cell 1 1a, or may have a dedicated separate power source.

Examples herein may be performed by the computer system 700 and/or a **processing circuitry 702** therein. The computer system 700 and/or the processing circuitry 702 therein may be able to communicate and/or to control any suitable entity of the battery arrangement 50 and the electrical system 1.

The computer system 700 and/or the processing circuitry 702 therein may be comprised within, remote to, or distributed among any suitable entity/entities of examples herein, e.g., the monitoring unit 30, the battery arrangement 50, the battery control unit 20, the thermal control unit 10, the electrical system 1, or a combination thereof.

In particular, the electrical system 1 may comprise the battery arrangement 50. The battery arrangement 50 may comprise the computer system 700 and/or the processing circuitry 702 therein, e.g., as part of any one or more units of the battery arrangement 50. The battery arrangement 50 may be controlled by the computer system 700 and/or the processing circuitry 702 therein in any suitable manner.

Examples herein may relate to utilizing the monitoring unit to monitor thermal properties e.g., cell surface temperature of the battery cell 11a when the electrical system 1 is in a low power mode also referred to as sleep mode. The monitoring unit may then perform a wake-up of the thermal control unit 10 or any other unit controlling the thermal management function.

Examples herein may relate to setting thresholds for when the battery arrangement 50 and the thermal management system should perform a wake-up procedure, i.e., waking up all or part of entities of the electrical system and/or the battery arrangement 50. When the electrical system 1 is a vehicle, a vehicle node may be responsible to provide use case information, which in examples herein may be translated to "set points" i.e., a wake-up condition for performing the thermal management function, the wake-up-condition may be set in terms of temperature, power etc., and which in turn may be translated to a target threshold or range for the monitoring unit 30 to wake-up the electrical system 1, the battery arrangement 50, and/or relevant associated units for performing the thermal management function.

Examples herein may improve efficiency of handling the battery arrangement 50, in particular when the electrical system 1 is a vehicle, by ensuring:
- startability - a temperature of the battery cell 11a is always kept at a level where the battery arrangement 50 can be used, e.g., which means that when the electrical system 1 is a vehicle, the vehicle may be started,
- performance - depending on the use case information, the thermal set point, i.e., wake-up condition, may be decided such that a desired performance, also referred to as a target ability, can be guaranteed, e.g., which means that when the electrical system 1 is a vehicle, the vehicle may be operated with regards to the target ability,
- warranty - the battery arrangement 50 is never allowed to violate the warranty limits for thermal management, e.g., as part of the target ability above,
- safety - the safety limits of the battery arrangement 50 are never violated.

Examples herein may relate to any of the following advantages:
- thermal properties, i.e., the at least one parameter as discussed as part of examples herein, may be measured or estimated in real time, even when rest of the system is in sleep mode, e.g., turned off
- a reduced or removed need for advanced thermal models trying to predict the future temperature in the battery arrangement 50, this is since such models are typically complex and are affected by aspects complex to predict accurately, e.g., ambient conditions such as temperature, heat radiating from surfaces, wind, direct sunlight or shadow etc., and due to measuring using the cell monitoring unit 30, no future prediction is needed,
- independent of battery pack placement and design since real time data is used, i.e., due to the cell monitoring unit 30,
- power saving - the electrical system 1 and/or the battery arrangement 50 may only wake-up when needed, and there may be no need for extra margins due to model inaccuracy.
- energy consumption during battery preconditioning may be lower than for other solutions due to only performing the thermal management function when needed to provide a target ability,
- maximizing a use of allowed temperature ranges without compromising with warranty, safety and use limits,
- less dependency in software synchronization e.g., since it may be possible to perform the features as discussed herein distributed and/or as part of any suitable entity of the battery arrangement 50,
- redundancy such that multiple cell monitors 30, 31 may measure the temperature and monitor that the temperature of the battery cell 11a and/or the one or more second battery cells 11b-c is within a set temperature range with respect to a target ability.

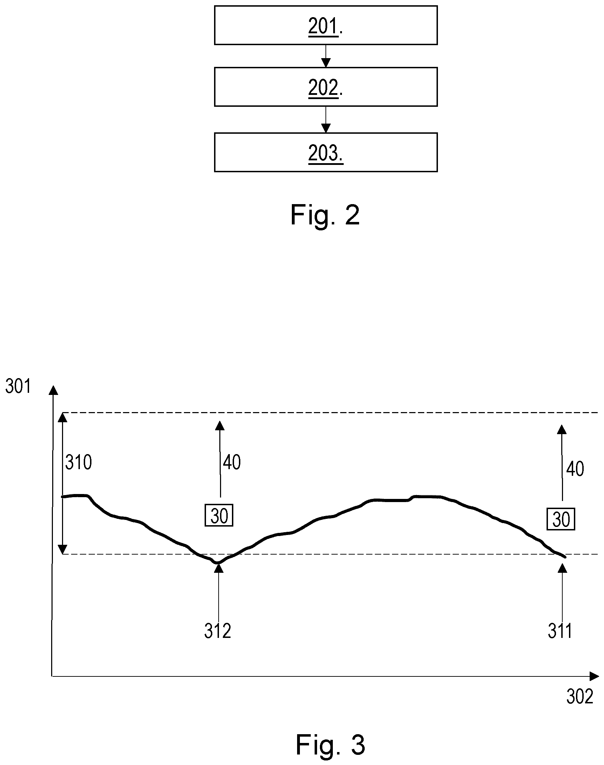

**FIG. 2** is a flow chart of an exemplary method for handling the battery arrangement 50 according to an example. The battery arrangement 50 is capable of powering the electrical system 1. The battery arrangement 50 comprises the battery cell 11a and the monitoring unit 30. The monitoring unit 30 is configured to monitor at least one parameter associated with a temperature of the battery cell 11a.

The method may be performed by the computer system 700 and/or the processing circuitry 702 therein, e.g., as part of any suitable entity of the battery arrangement 50 such as the battery control unit 20 and/or the thermal control unit 10 and/or any suitable ECU of the electrical system 1.

The method comprises the following actions which may be taken in any suitable order.

### Action 201

The method comprises obtaining information of a target ability of the battery arrangement 50 during a future time period. The target ability may be an input from a user, the electrical system 1, or may be determined based on use case information.

Additionally or alternatively, the use case information may be provided by cloud information, e.g., weather data which may indicate a temperature and/or weather condition the electrical system 1 shall remain in a sleep mode in the future time period.

At least part of the battery arrangement 50 and/or the electrical system 1 is expected to be arranged in a sleep mode during said future time period. In other words, the electrical system 1 is expected to be turned off and drain no power from the battery arrangement 50 or to drain power less than a predefined threshold. In some scenarios however, minimal power may be used, e.g., when the electrical system 1 is a vehicle and auxiliary equipment such as interior lighting is turned on. However, while the at least part of the battery arrangement 50 and/or the electrical system 1 is expected to be arranged in a sleep mode, as anticipated by some examples herein, the electrical system 1 may be transitioned into an active mode, e.g., when the electrical system 1 is a vehicle and a user decides to travel using the vehicle earlier than expected.

In examples herein, the electrical system 1 is typically a vehicle such as a truck, and wherein the future time period is a period of time where the vehicle is expected to be parked, i.e., an afternoon, overnight, or long term parking such as for more than 24 hours such.

When a vehicle is parked, depending on how long it is expected to be parked, different target abilities may be suitable. For example, when the electrical system 1 is a vehicle and parked for a short period of time, e.g., less than 24h hours, the target ability may be sufficient power to be able to drive with a full load, and when being parked for a longer period of time, e.g., more than 1 week, the target ability may be sufficient to start the electrical system 1 safely but a longer time to reach drivability is accepted, e.g., longer than a predefined time period.

In examples herein, the target ability may comprise at least one of:
- a power availability for the electrical system 1 during the future time period, e.g., the when the electrical system 1 is a vehicle, the vehicle must be able to use at least a certain amount of power at any time such as if the vehicle would be started even if indicated to be in long-term parking mode,
- an ability to transition the electrical system 1 from a sleep mode to an active mode during the future time period, e.g., the ability may only allow a transition from a sleep mode to an active mode which may relate to one or more basic operations such as using the thermal management function or using interior lighting when the electrical system is a vehicle, the electrical system 1 may then need to be heated or cooled for the battery arrangement 50 to provide further abilities,
- an ability for the electrical system 1 to perform one or more operations powered by the battery arrangement 50 during the future time period.

In other words, the target ability may relate to how much power the battery arrangement 50 can provide to the electrical system during the future time period. When the electrical system 1 is a vehicle, the target ability may relate to whether or not the vehicle can be driven or not, or at what power the vehicle can use, etc. When power is limited, the vehicle may have difficulties to travel or may experience limitations in drivability. For example, if a user of the vehicle is pressing a gas pedal of the vehicle, a lower power than expected may be experienced.

In some examples, obtaining the information of the target ability comprises:
- obtaining use case information associated with the battery arrangement 50 and/or the electrical system 1 during the future time period, and
- determining the target ability based on said use case information.

In other words, the target ability may be determined based on a concrete use case where the target ability may be predetermined or possible to determine. For example, if the electrical system is a vehicle to be parked for a long time, it may be determined that the target ability is that the vehicle shall not be able to be used for said long time or that the vehicle shall only be able to perform a number of limited operations during said time, such as to be started and to perform the thermal management function. If the electrical system 1 is an energy storage system, it may be known or determined that for certain weather periods and/or time periods of a day, the energy storage system is not needed. In both of these scenarios, this means that the battery arrangement 50 and the battery cell 11a can be allowed to be at higher or lower temperatures than what is necessary when operating and supplying full power.

In some examples, the use case information is indicative of at least one of:
- power the battery arrangement 50 shall be able to provide during the future time period,
- an intended status of the electrical system 1 during the future time period, e.g., that it shall be in a sleep mode such as when the electrical system 1 is a vehicle and is indicated to be parked,
- one or more operations the electrical system 1 shall be able to perform during the future time period, and
- a duration and/or timing information of the future time period, e.g., it may be indicated how long the electrical system 1 and/or the battery arrangement 50 shall be in the sleep mode.

In some examples, the use case information is indicative of that the electrical system 1 is expected to be in the sleep mode during the future time period. In these examples, the electrical system 1 may be expected to be able to perform one or more operations if the electrical system 1 is transitioned to an active mode during the future time period. The one or more operations may correspond to a set power level. In examples where the electrical system 1 is a vehicle, the battery arrangement 50 may be comprised in the vehicle, and the one or more operations may relate to at least one of:
- starting the vehicle, e.g., turning an ECU of the vehicle on and/or starting a motor of the vehicle,
- using auxiliary functions of the vehicle, e.g., turning on interior lighting, using dashboard functionality, using sensors of the vehicle, etc.,
- operating the vehicle within a certain time limit from starting the vehicle, e.g., the thermal management function may need to be used for a limited time period before being able to drive the vehicle, and
- initiating the thermal management function.

In examples herein, the use case information may additionally or alternatively be indicative of at least one of: environmental information and a capability of the battery arrangement 50. In these examples, the target ability may be determined based on at least one of the environmental information and the capability of the battery arrangement 50. For example, changing temperature of the weather may be considered, i.e., the ability to power the electrical system 1 may only be present for favorable weather conditions, e.g., where the temperature of the environment is within a set range. As another example, the capability of the battery arrangement 50 may also determine how the target ability needs to be limited such that the electrical system 1 can be used when transitioning to an active mode, e.g., after the future time period. For example, a capability of the battery arrangement 50 may relate to how many cells of battery packs are part of the battery arrangement 50, and thereby relate to how low voltage/current/power needs to be supplied from the battery cell 11a. More cells and/or battery packs may mean that the temperature of the battery cell 11a can be more relaxed as it may not need to supply as high power.

In examples herein, determining the target ability may be based on at least one of:
- predefined heuristics with respect to the use case information, and
- mapping the use case information to the target ability.

In other words, the use case information may be any suitable input, e.g., from a user, vehicle systems when the electrical system 1 is a vehicle, sensors, predictive systems, which may indicate how the electrical system 1 shall be used such as how long it is expected to be the sleep mode and/or what power it may need to be able to consume if unexpectedly transitioning early from the sleep mode. The target ability may be mapped or determined accordingly according to any suitable model or heuristics, e.g., in a predictive manner such that certain use case information may always correspond to the same certain target ability. As part of examples herein, the use case information may be when the electrical system 1 is a vehicle, the vehicle is to be long termed parked for a set amount of time and if started, limited functionality such as having to wait for a thermal management function to warm the battery arrangement 50 is acceptable to wait for if started prematurely. In these situations, the target ability may be to only be able to provide power for the thermal management function during the future time period. The target ability may be mapped directly from the use case information.

### Action 202

The method comprises determining a wake-up condition of the battery arrangement 50. The wake-up condition is a temperature-related condition associated with a need to initiate a thermal management function. In some examples herein, the wake-up condition may be referred to as a set point(s).

The thermal management function comprises adjusting a temperature of the battery arrangement 50 for the battery arrangement 50 to be able to provide the target ability.

A target temperature range may be determined or mapped from the target ability, and when the thermal management function is performed, the temperature of the battery arrangement, in particular the battery cell 11a, may be increased or decreased to fall into the target temperature range for the target ability. Increasing the temperature may relate to turning on a heater for a set period of time. Decreasing the temperature may relate to turning on a cooling system for a set period of time.

Determining the wake-up condition may comprise determining at least one condition relating to at least one out of: power, State of Charge (SoC), energy, or temperature of the battery arrangement 50 which individually or jointly with at least one other condition is associated with a need for the thermal management function of the battery arrangement 50 to be initiated for adjusting a temperature of the battery arrangement 50 for the battery arrangement 50 to be able to provide the target ability.

In other words, while it may be possible to always measure the temperature, other parameters may also be used for detecting whether or not the target ability can be provided and/or if the thermal management function needs to be initiated. This is since other parameters may depend or affect the temperature and/or may otherwise indicate the need to perform the thermal management function.

In some examples, the wake-up condition is associated with at least one of:
- a power availability constraint of the battery arrangement 50, e.g., if the power availability is sinking quickly such as by more than a certain rate, then the thermal management function may need to be performed,
- a temperature constraint of the battery arrangement 50, e.g., the temperature constrain may be an interval determined for the specific target ability such that the battery arrangement 50 can provide the target ability without degrading the battery arrangement 50,
- a rate of change constraint in temperature or power availability of the battery arrangement 50, e.g., when any parameter changes faster than a set rate, the thermal management function may need to be initiated as it may relate to changes in weather conditions.

In some examples, the wake-up condition may be a function of, i.e., based on, an SoC of the battery arrangement 50, a previous load profile of the battery arrangement 50, a State of Health (SoH) of the battery arrangement 50.

### Action 203

The method comprises triggering the monitoring unit 30 to be configured to perform a wake-up procedure in response to detecting that the at least one parameter associated with a temperature of the battery cell 11a fulfills the wake-up condition.

The wake-up procedure comprises triggering at least part of the battery arrangement 50 and/or the electrical system 1 to transition from a sleep mode to an active mode. This means that the battery arrangement 50 and/or the electrical system 1 may be transitioned from a mode of consuming no power or below a threshold of power, to a mode where components are turned on, for example, when the electrical system 1 is a vehicle, an ECU of the vehicle may be turned on and/or the thermal control unit 10 may be turned on.

The wake-up procedure further comprises at least one of:
- determining whether or not the thermal management function needs to be performed, and
- triggering the thermal management function to be performed.

Examples herein typically involves triggering the thermal management function to be performed since when the wake-up condition is fulfilled, it is already deemed necessary for the thermal management function to be performed for the battery arrangement 50 to be able to provide the target ability. However, if there are erroneous or inaccurate measurements leading to fulfilling the wake-up condition, there may be reasons to first determine whether or not the thermal management function needs to be performed, e.g., by performing further measurements and/or diagnostics of one or more temperature-related measurements of the battery arrangement 50 and determine whether or not the battery arrangement 50 is sufficiently warm or cold to provide the target ability, and if not, trigger the thermal management function.

The wake-up procedure may be performed by any of the entities described herein or distributed among them, e.g., the thermal management function may be performed by the thermal control unit 10 and/or as part of an ECU of the electrical system 1, in particular when the electrical system 1 is a vehicle.

In other words, triggering the monitoring unit 30 to be configured to perform the wake-up procedure may comprise configuring the monitoring unit 30 to perform the wake-up procedure in response to detecting that the at least one parameter fulfills the wake-up condition. Additionally, or alternatively, triggering the monitoring unit 30 to be configured to perform the wake-up procedure may comprise instructing the battery control unit 20 to configure the monitoring unit 30 to perform the wake-up procedure in response to detecting that the at least one parameter fulfills the wake-up condition.

In examples herein, triggering the monitoring unit 30 to be configured to perform the wake-up procedure may comprise determining a range and/or rate of change of the at least one parameter which fulfils the wake-up condition. In these examples, the monitoring unit 30 may be triggered to be configured to perform the wake-up procedure in response to detecting that the at least one parameter of the battery cell 1 1a is outside the determined range and/or is equal to or greater than the determined rate of change. In other words, the wake-up condition may relate to a general need to initiate the thermal management function which may translate to a concrete parameter range or rate of change which corresponds to the wake-up condition. The range may be transmitted to the monitoring unit 30, e.g., as part of configuring the monitoring unit 30.

The wake-up condition may relate to an overall condition for providing the target ability. Such an overall condition may need to be concrete for the monitoring unit 30 and hence, triggering the monitoring unit 30 to be configured to perform the wake-up procedure may comprise determining how the wake-up condition shall be detected with respect to the at least one parameter. Triggering the monitoring unit 30 to be configured to perform the wake-up procedure may therefore relate to converting the wake-up condition into a corresponding condition for the at least one parameter. Said conversion may be performed based on a predefined model for which thresholds or intervals the at least one parameter shall adhere to with respect to certain wake-up conditions.

In some examples herein, the at least one parameter associated with the temperature of the battery cell 11a comprises at least one of:
- a temperature measurement or estimation of the battery cell 11a,
- a voltage measurement or estimation of the battery cell 11a, and
- a resistance measurement or estimation of the battery cell 11a.

Voltage and/or resistance of the battery cell 11a may have direct correlation to temperature and may therefore be used instead of, or in addition to temperature measurements or estimations. Estimations of the battery cell 11a may be performed with respect to simulations, predictive models, and/or based on measurements of other parts which may affect the battery cell 11a. For example, a temperature of the battery cell 11a may be estimated based on temperature measurements of the one or more second battery cells 11b-c which may be adjacent to the battery cell 11a.

**FIG. 3** illustrates an example scenario. An **Y-axis 301** may illustrate temperature as at least one parameter, and an **X-axis 302** may represent time, e.g., as part of the future time period when the electrical system 1 is in sleep mode. The target ability is obtained as in action 201, and the wake-up condition is determined as in action 202. For the wake-up condition to be fulfilled, the at least one parameter of action 203, which in this example scenario is a measured temperature of the battery cell 11a, needs to be outside the range 310. A **range 310** may be determined as part of action 203 when triggering the monitoring unit 30 to be configured to perform the wake-up procedure when detecting that the at least one parameter fulfills the wake-up procedure. In this context, fulfilling the wake-up procedure may be when the at least one parameter is outside the range 310. The range 310 may be the range discussed in action 203.

It may be considered that for different target abilities, the range 310 will be different and typically change in maximum and minimum value.

As exemplified in FIG. 3., the temperature falls to go outside the range 310 at a **first point in time 312,** where the monitoring unit 30 performs the wake-up procedure by sending the first wake-up signal 40 to any suitable entity, e.g., the battery control unit 20, the thermal control unit 10, or an ECU of the electrical system 1, which in turn triggers the thermal management function to heat the battery arrangement 50. After some time, the battery arrangement 50 may again cool down, and at a **second point in time 311** the temperature have again fallen below the range 310, thereby triggering a new wake-up procedure and associated wake-up signal. While FIG.3 exemplifies when the temperature goes outside the range 310, same wake-up procedure may further be performed if the temperature would fall or increase faster than a predefined rate of change

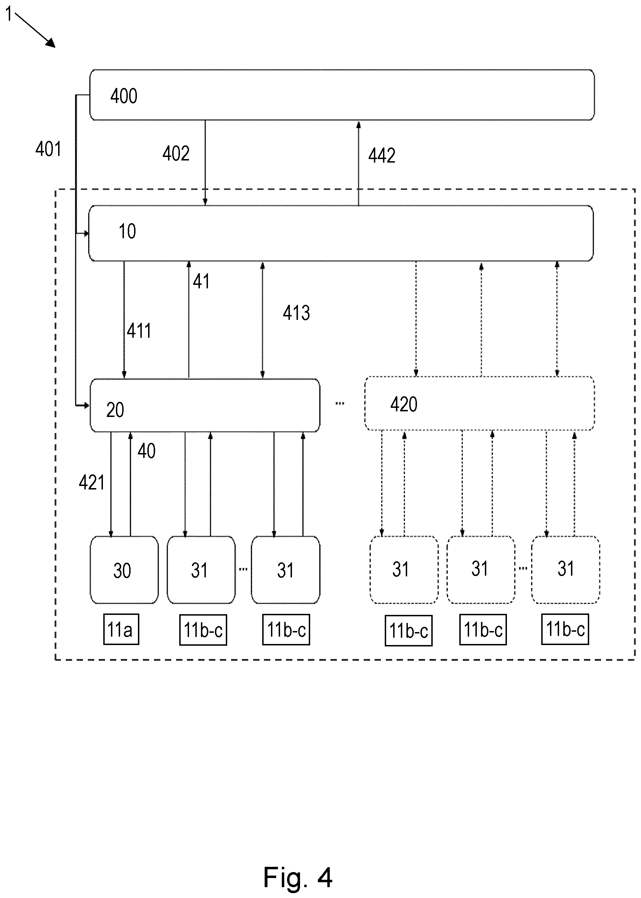

**FIG. 4** illustrates an example scenario of the electrical system 1. The electrical system 1 in this scenario may be a vehicle such as a truck. The electrical system 1 comprises a main **ECU 400** for controlling the electrical system 1, e.g., which may be in sleep mode during the future time period of action 201.

As seen in FIG. 4, the electrical system 1 may comprise multiple second battery cells 11b-c which may be monitored by other secondary monitoring units 31, which may or may not be controlled by the battery control unit 20 or by one or more second battery control units 420.

The ECU 400 may be able to **transmit 401** a hardware or software wake-up signal to the battery control unit 20 or the thermal control unit 10. However, in examples herein, a reverse wake-up signal may be used where the monitoring unit 30 causes wake-up of the battery control unit 20, the thermal management unit 10, and the ECU 400.

Examples herein, e.g., the method as discussed above, may comprise any of the following steps.

**Step 1.** The electrical system 1, e.g., by use of the ECU 400 may decide a use case, e.g., long term parking, overnight sleep mode, etc. for thermal management.

The use case may relate to a certain power possible to use by the electrical system 1 for the future time period when the electrical system 1 is in sleep mode. The power may be zero or below a threshold. The use case may relate to the duration of the future time period. The use case may relate to an expected capability of the battery arrangement 50 when the electrical system 1 is transitioned to an active mode.

**Step 2.** The ECU 400 transmits the use case as part of use case information, e.g., to be obtained as part of exampled herein, e.g., as obtained in action 201. In this example scenario, the ECU 400 **transmits 402** the use case information to the thermal control unit 10, and action 201 may be performed as part of the thermal control unit 10. The use case information may define a target ability of the electrical system 1 for the future time period.

**Step 3.** The thermal control unit 10 may determine a wake-up condition e.g., associated with temperature, power ability or other parameters of the battery arrangement. Step 3 may be performed as part of action 202. The wake-up condition may be referred to as a set point.

**Step 4.** The thermal control unit 10 **sends 411** the wake-up condition to the battery control unit 10. The wake-up condition may be a target condition relating to temperature of the battery cell 11a when the thermal control unit 10 is expected to be woken up to be able to perform the thermal management function such that the battery arrangement 50 can provide the target ability.

**Step 5.** The battery control unit 20 may perform a conversion of the wake-up condition to a range or threshold for the monitoring unit 30 to use as part of detecting when the at least one parameter fulfils the wake-up condition, e.g., relating to temperature, voltage or resistance. Step 5 may be performed as part of action 203.

**Step 6.** The battery control unit 20 may **configure 421** the threshold or range to monitoring unit 30 before the battery control unit 20 transitions to a sleep mode. Step 6 may be performed as part of action 203.

**Step 7.** The ECU 400, the thermal control unit 10 and the battery control unit 20 may then transition to a sleep mode, e.g., turn off or go into a low power mode. This step may be triggered by the ECU 400.

**Step 8.** The monitoring unit 30 may monitor the at least one parameter, e.g., temperature and voltage, and is awake in low power mode. The monitoring unit 30 may monitor if the threshold set is violated or if the at least one parameter is outside the set range.

**Step 9.** If threshold or range is violated: the monitoring unit 30 may send 40 a first wake-up signal 40 to the battery control unit 20.

**Step 10.** The battery control unit 20 may detect the first wake-up signal 40 and be woken up, i.e., transitioned to an active mode. The battery control unit 20 may perform some rationalization, and may send the second wake-up signal 41 as a wake-up request to the thermal control unit 10.

**Step 11.** The thermal control unit 10 may detect the second wake-up signal 41 and be woken up, i.e., transitioned to an active mode. The thermal control unit 10 may send 442 a wake-up signal to the ECU 400.

**Step 12.** CAN communication may get enabled and information of the battery arrangement may be **transmitted 413** over the CAN. The thermal management function may be performed or a thermal management rationalization procedure may be performed which may comprise to determine whether or not the thermal management function is needed to be initiated, and if so, perform the thermal management function.

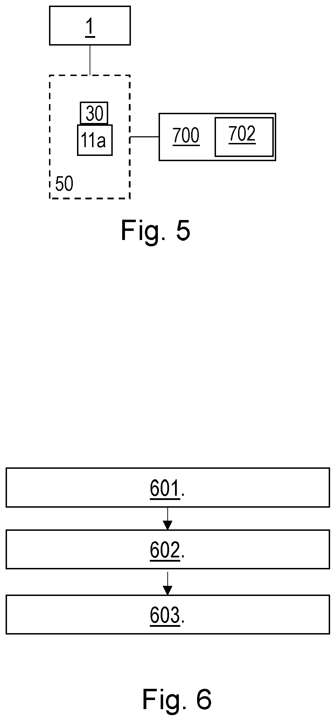

**FIG. 5** is another view of **FIG. 1****,** according to an example.

The computer system 700 comprising the processing circuitry 702 is configured to handle the battery arrangement 50. The battery arrangement 50 capable of powering the electrical system 1 is provided. The battery arrangement 50 comprises the battery cell 11a and the monitoring unit 30. The cell monitoring unit 30 is configured to monitor at least one parameter associated with a temperature of the battery cell 11a.

The processing circuitry 702 is configured to obtain information of a target ability of the battery arrangement 50 during a future time period. At least part of the battery arrangement 50 and/or the electrical system 1 is expected to be arranged in a sleep mode during said future time period.

The processing circuitry 702 is configured to, based on the target ability, determine a wake-up condition of the battery arrangement 50, the wake-up condition being a temperature-related condition associated with a need to initiate a thermal management function. The thermal management function comprises adjusting a temperature of the battery arrangement 50 for the battery arrangement 50 to be able to provide the target ability.

The processing circuitry 702 is configured to, trigger the monitoring unit 30 to be configured to perform a wake-up procedure in response to detecting that the at least one parameter associated with a temperature of the battery cell 11a fulfills the wake-up condition.

The wake-up procedure comprises triggering at least part of the battery arrangement 50 and/or the electrical system 1 to transition from a sleep mode to an active mode.

The wake-up procedure further comprises at least one of:
- determining whether or not the thermal management function needs to be performed, and
- triggering the thermal management function to be performed.

**FIG. 6** is a flow chart of an exemplary method according to an example.

A computer-implemented method for handling the battery arrangement 50 is provided. The battery arrangement 50 is capable of powering the electrical system 1. The battery arrangement 50 comprises the battery cell 11a and the monitoring unit 30. The cell monitoring unit 30 is configured to monitor at least one parameter associated with a temperature of the battery cell 11a.

The method can be combined with any of the examples herein, in particular actions 201-203 in any suitable manner. The method comprises the following actions 601-603.

### Action 601

The method comprises, by the processing circuitry 702 of the computer system 700, obtaining information of a target ability of the battery arrangement 50 during a future time period. At least part of the battery arrangement 50 and/or the electrical system 1 is expected to be arranged in a sleep mode during said future time period.

### Action 602

The method comprises, by the processing circuitry 702, based on the target ability, determining a wake-up condition of the battery arrangement 50. The wake-up condition is a temperature-related condition associated with a need to initiate a thermal management function. The thermal management function comprises adjusting a temperature of the battery arrangement 50 for the battery arrangement 50 to be able to provide the target ability.

### Action 603

The method comprises, by the processing circuitry 702, triggering the monitoring unit 30 to be configured to perform a wake-up procedure in response to detecting that the at least one parameter associated with a temperature of the battery cell 11a fulfills the wake-up condition.

The wake-up procedure comprises triggering at least part of the battery arrangement 50 and/or the electrical system 1 to transition from a sleep mode to an active mode, and wherein the wake-up procedure further comprises at least one of:
- determining whether or not the thermal management function needs to be performed, and
- triggering the thermal management function to be performed.

### Further examples and explanations

Examples herein may be implemented as part of multiple ECUs or same ECU, e.g., when the electrical system 1 is a vehicle.

Wake-up as part of the wake-up procedure may be implemented by various methods e.g., using wake on CAN and/or using a hardware signal to wake-up any suitable entity of the electrical system 1 and/or the battery arrangement 50.

The monitoring unit 30 may be configured to measure if the at least one parameter is outside the range for the wake-up condition, i.e., whether the at least one parameter is above associated thresholds related to temperature.

The at least one parameter, when measuring temperature, may measure cell surface temperature and/or coolant temperature of the battery cell 11a.

The battery arrangement 50 may comprise any suitable number of battery cells 11a-c in the system and any suitable number of cell monitoring units 30, 31 per battery cell or for all of the number of battery cells. In other words, each cell monitoring unit 30, 31 may measure any suitable number of battery cells. The cell monitoring units 30, 31 may communicate with the battery control unit 20 such as in a daisy chain e.g., to synchronize or confirm any measurement.

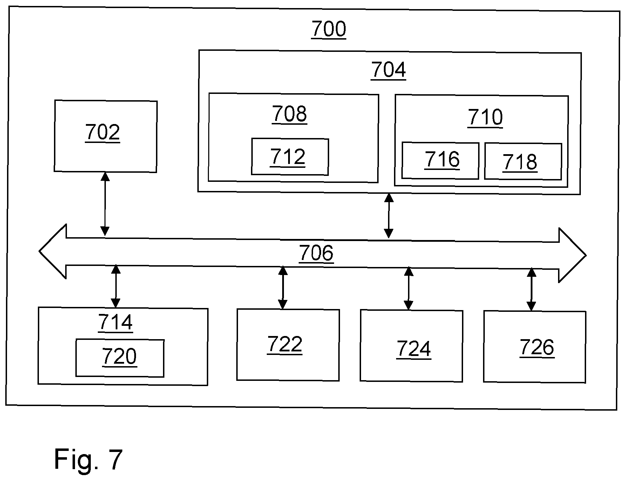

**FIG. 7** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device
interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a list of Examples 1-20 which may be combined with any of the above examples or with the subject matter of the claims in any suitable manner.
Example 1. A computer system (700) comprising processing circuitry (702) configured to handle a battery arrangement (50) being capable of powering an electrical system (1), the battery arrangement (50) comprising a battery cell (1 1a) and a monitoring unit (30) configured to monitor at least one parameter associated with a temperature of the battery cell (11a), the processing circuitry (702) is further configured to:
   - obtain information of a target ability of the battery arrangement (50) during a future time period, wherein at least part of the battery arrangement (50) and/or the electrical system (1) is expected to be arranged in a sleep mode during said future time period,
   - based on the target ability, determine a wake-up condition of the battery arrangement (50), the wake-up condition being a temperature-related condition associated with a need to initiate a thermal management function, wherein the thermal management function comprises adjusting a temperature of the battery arrangement (50) for the battery arrangement (50) to be able to provide the target ability, and
   - trigger the monitoring unit (30) to be configured to perform a wake-up procedure in response to detecting that the at least one parameter associated with a temperature of the battery cell (11a) fulfills the wake-up condition,
   - wherein the wake-up procedure comprises triggering at least part of the battery arrangement (50) and/or the electrical system (1) to transition from a sleep mode to an active mode, and wherein the wake-up procedure further comprises at least one of:
      ∘ determining whether or not the thermal management function needs to be performed, and
      ∘ triggering the thermal management function to be performed.
Example 2. A computer system (700) according to Example 1, wherein the target ability comprise at least one of:
   - a power availability for the electrical system (1) during the future time period,
   - an ability to transition the electrical system (1) from a sleep mode to an active mode during the future time period, and
   - an ability for the electrical system (1) to perform one or more operations powered by the battery arrangement (50) during the future time period.
Example 3. A computer system (700) according to Example 1 or 2, wherein the processing circuitry (702) is configured to obtain the information of the target ability by being configured to:
   - obtain use case information associated with the battery arrangement (50) and/or the electrical system (1) during the future time period, and
   - determine the target ability based on said use case information.
Example 4. A computer system (700) according to Example 3, wherein the use case information is indicative of at least one of:
   - power the battery arrangement (50) shall be able to provide during the future time period,
   - an intended status of the electrical system (1) during the future time period,
   - one or more operations the electrical system (1) shall be able to perform during the future time period, and
   - a duration and/or timing information of the future time period.
Example 5. A computer system (700) according to Example 3 or 4, wherein the use case information is indicative of that the electrical system (1) is expected to be in sleep mode during the future time period and where the electrical system (1) is expected to be able to perform one or more operations if the electrical system (1) is transitioned to an active mode during the future time period.
Example 6. A computer system (700) according to Example 4 or 5, wherein the electrical system (1) is a vehicle, the battery arrangement (50) is comprised in the vehicle, and wherein the one or more operations relates to at least one of:
   - starting the vehicle,
   - operating the vehicle within a certain time limit from starting the vehicle, and
   - initiating the thermal management function.
Example 7. A computer system (700) according to any of Examples 3-6, wherein the use case information is indicative of at least one of: environmental information and a capability of the battery arrangement (50), and wherein the processing circuitry (702) is configured to determine the target ability based on at least one of the environmental information and the capability of the battery arrangement (50).
Example 8. A computer system (700) according to any of Examples 3-7, wherein the processing circuitry (702) is configured to determine the target ability based on at least one of:
   - predefined heuristics with respect to the use case information, and
   - mapping the use case information to the target ability.
Example 9. A computer system (700) according to any of the preceding Examples, wherein the processing circuitry (702) is configured to determine the wake-up condition by being configured to determine at least one condition relating to at least one out of: power, State of Charge, SoC, energy, or temperature of the battery arrangement (50) which individually or jointly with at least one other condition is associated with a need for the thermal management function of the battery arrangement (50) to be initiated for adjusting a temperature of the battery arrangement (50) for the battery arrangement (50) to be able to provide the target ability.
Example 10. A computer system (700) according to any preceding Examples, wherein the wake-up condition is associated with at least one of:
   - a power availability constraint of the battery arrangement (50),
   - a temperature constraint of the battery arrangement (50),
   - a rate of change constraint in temperature or power availability of the battery arrangement (50).
Example 11. A computer system (700) according to any of the preceding Examples, wherein the processing circuitry (702) is configured to trigger the monitoring unit (30) to be configured to perform the wake-up procedure by being configured to at least one of:
   - configure the monitoring unit (30) to perform the wake-up procedure in response to detecting that the at least one parameter fulfills the wake-up condition, and to
   - instruct a battery control unit arranged to control the monitoring unit (30) to configure the monitoring unit (30) to perform the wake-up procedure in response to detecting that the at least one parameter fulfills the wake-up condition.
Example 12. A computer system (700) according to any preceding Examples wherein the processing circuitry (702) is configured to trigger the monitoring unit (30) to be configured to perform the wake-up procedure by being configured to, determine a range and/or rate of change of the at least one parameter which fulfils the wake-up condition, and to trigger the monitoring unit (30) to be configured to perform the wake-up procedure in response to detecting that the at least one parameter of the battery cell (11a) is outside the determined range and/or greater than or equal to the determined rate of change.
Example 13. A computer system (700) according to any preceding Examples wherein the at least one parameter associated with the temperature of the battery cell (11a) comprises at least one of:
   - a temperature measurement or estimation of the battery cell (11a),
   - a voltage measurement or estimation of the battery cell (11a), and
   - a resistance measurement or estimation of the battery cell (11a).
Example 14. An electrical system (1) comprising a battery arrangement (50) arranged for powering the electrical system (1), the battery arrangement (50) comprising a battery cell (11a) and a monitoring unit (30) configured to monitor at least one parameter associated with a temperature of the battery cell (11a), and wherein at least one of:
   - the electrical system (1) comprises a computer system (700) according to any of Examples 1-13, and
   - the battery arrangement (50) is controlled by the computer system (700) according to any of Examples 1-13.
Example 15. A computer-implemented method for handling a battery arrangement (50) being capable of powering an electrical system (1), the battery arrangement (50) comprising a battery cell (11a) and a monitoring unit (30) configured to monitor at least one parameter associated with a temperature of the battery cell (11a), the method comprising:
   - by a processing circuitry (702) of a computer system (700), obtaining (201, 601) information of a target ability of the battery arrangement (50) during a future time period, wherein at least part of the battery arrangement (50) and/or the electrical system (1) is expected to be arranged in a sleep mode during said future time period,
   - by the processing circuitry (702), based on the target ability, determining (202, 602) a wake-up condition of the battery arrangement (50), the wake-up condition being a temperature-related condition associated with a need to initiate a thermal management function, wherein the thermal management function comprises adjusting a temperature of the battery arrangement (50) for the battery arrangement (50) to be able to provide the target ability, and
   - by the processing circuitry (702), triggering (203, 603) the monitoring unit (30) to be configured to perform a wake-up procedure in response to detecting that the at least one parameter associated with a temperature of the battery cell (11a) fulfills the wake-up condition,
   - wherein the wake-up procedure comprises triggering at least part of the battery arrangement (50) and/or the electrical system (1) to transition from a sleep mode to an active mode, and wherein the wake-up procedure further comprises at least one of:
      ∘ determining whether or not the thermal management function needs to be performed, and
      ∘ triggering the thermal management function to be performed.
Example 16. A method according to Example 15, wherein the target ability comprise at least one of:
   - a power availability for the electrical system (1) during the future time period,
   - an ability to transition the electrical system (1) from a sleep mode to an active mode during the future time period, and
   - an ability for the electrical system (1) to perform one or more operations powered by the battery arrangement (50) during the future time period.
Example 17. A method according to Example 15 or 16, wherein obtaining (201) the information of the target ability comprises:
   - obtaining use case information associated with the battery arrangement (50) and/or the electrical system (1) during the future time period, and
   - determining the target ability based on said use case information.
Example 18. A method according to Example 17, wherein the use case information is indicative of at least one of:
   - power the battery arrangement (50) shall be able to provide during the future time period,
   - an intended status of the electrical system (1) during the future time period,
   - one or more operations the electrical system (1) shall be able to perform during the future time period, and
   - a duration and/or timing information of the future time period.
Example 19. A computer program product comprising program code for performing, when executed by the processing circuitry (702), the method of any of Examples 15-18.
Example 20. A non-transitory computer-readable storage medium comprising instructions, which when executed by the processing circuitry (702), cause the processing circuitry (702) to perform the method of any of Examples 15-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (700) comprising processing circuitry (702) configured to handle a battery arrangement (50) being capable of powering an electrical system (1), the battery arrangement (50) comprising a battery cell (11a) and a monitoring unit (30) configured to monitor at least one parameter associated with a temperature of the battery cell (11a), the processing circuitry (702) is further configured to:
- obtain information of a target ability of the battery arrangement (50) during a future time period, wherein at least part of the battery arrangement (50) and/or the electrical system (1) is expected to be arranged in a sleep mode during said future time period,
- based on the target ability, determine a wake-up condition of the battery arrangement (50), the wake-up condition being a temperature-related condition associated with a need to initiate a thermal management function, wherein the thermal management function comprises adjusting a temperature of the battery arrangement (50) for the battery arrangement (50) to be able to provide the target ability, and
- trigger the monitoring unit (30) to be configured to perform a wake-up procedure in response to detecting that the at least one parameter associated with a temperature of the battery cell (11a) fulfills the wake-up condition,
- wherein the wake-up procedure comprises triggering at least part of the battery arrangement (50) and/or the electrical system (1) to transition from a sleep mode to an active mode, and wherein the wake-up procedure further comprises at least one of:
∘ determining whether or not the thermal management function needs to be performed, and
∘ triggering the thermal management function to be performed.

2. A computer system (700) according to claim 1, wherein the target ability comprise at least one of:
- a power availability for the electrical system (1) during the future time period,
- an ability to transition the electrical system (1) from a sleep mode to an active mode during the future time period, and
- an ability for the electrical system (1) to perform one or more operations powered by the battery arrangement (50) during the future time period.

3. A computer system (700) according to claim 1 or 2, wherein the processing circuitry (702) is configured to obtain the information of the target ability by being configured to:
- obtain use case information associated with the battery arrangement (50) and/or the electrical system (1) during the future time period, and
- determine the target ability based on said use case information.

4. A computer system (700) according to claim 3, wherein the use case information is indicative of at least one of:
- power the battery arrangement (50) shall be able to provide during the future time period,
- an intended status of the electrical system (1) during the future time period,
- one or more operations the electrical system (1) shall be able to perform during the future time period, and
- a duration and/or timing information of the future time period.

5. A computer system (700) according to claim 3 or 4, wherein the use case information is indicative of that the electrical system (1) is expected to be in sleep mode during the future time period and where the electrical system (1) is expected to be able to perform one or more operations if the electrical system (1) is transitioned to an active mode during the future time period.

6. A computer system (700) according to claim 4 or 5, wherein the electrical system (1) is a vehicle, the battery arrangement (50) is comprised in the vehicle, and wherein the one or more operations relates to at least one of:
- starting the vehicle,
- operating the vehicle within a certain time limit from starting the vehicle, and
- initiating the thermal management function.

7. A computer system (700) according to any of claims 3-6, wherein the use case information is indicative of at least one of: environmental information and a capability of the battery arrangement (50), and wherein the processing circuitry (702) is configured to determine the target ability based on at least one of the environmental information and the capability of the battery arrangement (50).

8. A computer system (700) according to any of claims 3-7, wherein the processing circuitry (702) is configured to determine the target ability based on at least one of:
- predefined heuristics with respect to the use case information, and
- mapping the use case information to the target ability.

9. A computer system (700) according to any of the preceding claims, wherein the processing circuitry (702) is configured to determine the wake-up condition by being configured to determine at least one condition relating to at least one out of: power, State of Charge, SoC, energy, or temperature of the battery arrangement (50) which individually or jointly with at least one other condition is associated with a need for the thermal management function of the battery arrangement (50) to be initiated for adjusting a temperature of the battery arrangement (50) for the battery arrangement (50) to be able to provide the target ability.

10. A computer system (700) according to any preceding claims, wherein the wake-up condition is associated with at least one of:
- a power availability constraint of the battery arrangement (50),
- a temperature constraint of the battery arrangement (50),
- a rate of change constraint in temperature or power availability of the battery arrangement (50).

11. A computer system (700) according to any preceding claims wherein the processing circuitry (702) is configured to trigger the monitoring unit (30) to be configured to perform the wake-up procedure by being configured to, determine a range and/or rate of change of the at least one parameter which fulfils the wake-up condition, and to trigger the monitoring unit (30) to be configured to perform the wake-up procedure in response to detecting that the at least one parameter of the battery cell is outside the determined range and/or is equal to or greater than the determined rate of change.

12. An electrical system (1) comprising a battery arrangement (50) arranged for powering the electrical system (1), the battery arrangement (50) comprising a battery cell (11a) and a monitoring unit (30) configured to monitor at least one parameter associated with a temperature of the battery cell (11a), and wherein at least one of:
- the electrical system (1) comprises a computer system (700) according to any of claims 1-11, and
- the battery arrangement (50) is controlled by the computer system (700) according to any of claims 1-11.

13. A computer-implemented method for handling a battery arrangement (50) being capable of powering an electrical system (1), the battery arrangement (50) comprising a battery cell (11a) and a monitoring unit (30) configured to monitor at least one parameter associated with a temperature of the battery cell (11a), the method comprising:
- by a processing circuitry (702) of a computer system (700), obtaining (201, 601) information of a target ability of the battery arrangement (50) during a future time period, wherein at least part of the battery arrangement (50) and/or the electrical system (1) is expected to be arranged in a sleep mode during said future time period,
- by the processing circuitry (702), based on the target ability, determining (202, 602) a wake-up condition of the battery arrangement (50), the wake-up condition being a temperature-related condition associated with a need to initiate a thermal management function, wherein the thermal management function comprises adjusting a temperature of the battery arrangement (50) for the battery arrangement (50) to be able to provide the target ability, and
- by the processing circuitry (702), triggering (203, 603) the monitoring unit (30) to be configured to perform a wake-up procedure in response to detecting that the at least one parameter associated with a temperature of the battery cell (11a) fulfills the wake-up condition,
- wherein the wake-up procedure comprises triggering at least part of the battery arrangement (50) and/or the electrical system (1) to transition from a sleep mode to an active mode, and wherein the wake-up procedure further comprises at least one of:
∘ determining whether or not the thermal management function needs to be performed, and
∘ triggering the thermal management function to be performed.

14. A computer program product comprising program code for performing, when executed by the processing circuitry (702), the method of claim 13.

15. A non-transitory computer-readable storage medium comprising instructions, which when executed by the processing circuitry (702), cause the processing circuitry (702) to perform the method of claim 13.
